# FASCICULE DE BREVET EUROPEEN

(11) **EP 1 247 481 B1**
(45) Date de publication et mention de la délivrance du brevet: **17.11.2004**
(21) Numéro de dépôt: 01108382.1
(22) Date de dépôt: 03.04.2001
(51) Int. Cl.: A47J 31/40

(54) **Dispositif d'extraction avec système de chargement en capsules intégré**
Extraktionsvorrichtung mit integrierter Kapselzuführeinrichtung
Extraction apparatus with integrated cartridge supply system

(43) Date de publication de la demande: 09.10.2002
(73) Titulaire: SOCIETE DES PRODUITS NESTLE S.A., 1800 Vevey (CH)
(72) Inventeur: Denisart, Jean-Luc, 1096 Cully (CH); Colantonio, Jean-Luc, 1804 Corsier (CH); Scorrano, Lucio, 1400 Yverdon (CH)
(74) Mandataire: Borne, Patrice Daniel

(56) Documents cités:
- EP-A- 1 002 490
- EP-A- 1 046 366
- US-A- 6 026 732

## Description

La présente invention se rapporte au domaine de la préparation des boissons utilisant le principe d'extraction d'une substance contenue dans un élément de recharge, dit "capsule", par traversée d'un flux d'eau sous pression. L'invention se rapporte plus particulièrement à un dispositif d'extraction comprenant un système d'alimentation et de chargement en capsules.

Il est connu de préparer des boissons telles que du café à partir de capsules contenant une dose prédéterminée de café torréfié moulu. Les capsules présentent l'avantage de faciliter les opérations de préparation de la boisson, d'assurer une préparation relativement propre sans déchet de marc visible, et de contrôler le dosage et la qualité du produit préparé.

Le principe d'extraction d'une capsule consiste à (i) enfermer la capsule dans une enceinte résistante à la pression, (ii) percer l'une des faces de la capsule généralement au moyen de pointe(s) ou lame(s) située(s) dans une partie comprenant une arrivée d'eau appelée communément "douche", (iii) introduire une quantité d'eau chaude dans la capsule de façon à créer un environnement sous pression à l'intérieur de l'élément pour produire l'extrait liquide de café puis, (iv) libérer l'extrait liquide de café au travers de la face opposée de la capsule qui, au contact de parties saillantes, s'ouvre sous l'effet de la pression interne créée dans la capsule.

Dans la plupart des dispositifs d'extraction du commerce, le chargement des capsules se fait de façon manuelle et individuelle dans le porte-capsule d'extraction ; en général, partie correspondant à la base d'où s'écoule ensuite l'extrait liquide. Le porte-capsule peut se présenter sous différentes formes ; comme sous la forme d'une cuillère à engagement par baïllonnette du type de celles des machines expresso traditionnelles. Il existe aussi des systèmes de chargement en capsules du type à tiroir mobile susceptibles d'amener la capsule dans un mouvement pour chargement simplifié, linéaire horizontal ou autre, dans le système d'extraction. Un tel système est décrit dans la demande co-pendante européenne numéro 00110102.1 appartenant au déposant.

Il existe cependant un besoin pour assurer une alimentation en capsules à partir d'une réserve de capsules ne nécessitant pas la manipulation directe avec la capsule mais au contraire, favorisant la disposition de manière plus automatisée des capsules dans le système d'extraction. Il existe aussi un besoin de mettre à la disposition des réserves de capsules de nature identique ou au contraire, différente, tout en offrant une grande facilité de chargement. De tels systèmes ont été décrits dans plusieurs publications déjà. Par exemple, la demande de brevet suisse No. 471 570 se rapporte aux machines automatiques à café comprenant un mécanisme de chauffage et de dosage d'eau, un mécanisme d'emmagasinage de cartouches de charge contenant de la poudre à café coopérant avec un mécanisme recevant et transportant les cartouches pour les placer devant une bouche de décharge d'eau chaude et pour faire sortir les cartouches après infusion ; tous ces mécanismes étant actionnés par des éléments moteurs synchronisés. Un tel dispositif est cependant très compliqué et prend une place considérable en raison du transport de la capsule entre son point d'emmagasinage et son point d'infusion.

La demande de brevet européenne No. 1046366 se rapporte à un dispositif pour l'alimentation de portions de café moulu dans une unité d'extraction ayant un magasin permettant d'accommoder une pluralité de portions de café et des moyens de déchargement des portions individuelles dans le dispositif d'alimentation. Le système de libération des capsules est relativement complexe et met en oeuvre plusieurs paires de gâchettes actionnables par des paires d'éléments d'actionnement eux-mêmes commandés par un électro-aimant. Chaque série ou tube de portions de café possède ses propres éléments de libération rendant le système relativement compliqué, peu rationnel et coûteux. D'autre part, le système demande une grande précision et une synchronisation parfaite du mouvement des éléments de libération qui doivent agir en même temps pour éviter tout coincement des portions de café dans le système. Au fur et à mesure des répétitions et de l'usure des pièces, un tel système peut s'avérer peu fiable et sujet à des défaillances plus ou moins sérieuses. Un autre inconvénient provient de ce que la chambre d'extraction recevant la portion doit pivoter sur le côté pour s'aligner dans la direction du support d'extraction puis s'élever pour rejoindre ledit support dans un mouvement linéaire. La combinaison répétée de mouvements complexes selon plusieurs axes est susceptible d'affecter la précision du système, favorise l'usure prématurée des pièces mécaniques et ainsi diminue la fiabilité ainsi que la durée de vie du dispositif. Un autre inconvénient provient de ce que l'extraction se fait de bas-en-haut, avec sortie du liquide extrait par le dessus du support d'extraction ; ce qui fait que l'on doit prévoir un tube d'amenée vers l'endroit de remplissage de la tasse. Une telle configuration pose des problèmes de vidange du liquide et aussi d'encombrement.

L'un des buts principaux de l'invention est donc de proposer un dispositif d'alimentation et de chargement associé à un système d'extraction de capsules qui soit plus simple, moins encombrant et d'utilisation plus fiable et sans problème d'écoulement et de vidange du liquide extrait.

Ce but est atteint avec un dispositif d'alimentation en capsules selon la revendication indépendante 1.

Une telle configuration participe donc à une alimentation plus directe, plus rapide et vise à limiter les interactions mécaniques pouvant engendrer une usure précoce et réduire la durée de vie du dispositif.

Selon un mode de réalisation avantageux, les moyens de chargement comprennent : un moyen de support sur lequel le moyen d'emmagasinage est déplaçable en rotation comprenant un passage arrangé pour permettre la descente d'une capsule dans la partie de réception du système d'extraction selon une configuration d'alignement d'une série par rapport au passage et,
un moyen d'obturation mobile par rapport audit passage entre une position dans laquelle le passage est obturé par le moyen d'obturation de façon à retenir la capsule en regard du passage dans le moyen d'emmagasinage et une position dans laquelle le passage est ouvert pour autoriser la descente de la capsule dans la partie de réception du système d'extraction.

Ainsi, une telle configuration a pour avantage de mettre en oeuvre pour le chargement en capsules un nombre réduit de pièces qui sont communes à toutes les séries de capsules ; à savoir le passage d'un moyen de support et un moyen d'obturation à deux positions communs tels que définis. Une telle configuration peut aussi permettre une sélection rapide de la capsule dans la série désirée par le passage puis par une libération de la capsule grâce au moyen à deux positions ; ceci, de manière fiable et rapide.

Selon un mode préféré, le moyen d'obturation comprend une partie complémentaire du système d'extraction qui lorsque le moyen se trouve dans la position d'obturation du passage se trouve dans l'alignement de la partie de réception du système d'extraction. En d'autre termes, l'obturation du passage après le chargement de la capsule a pour effet de rassembler les parties d'assemblage du système d'extraction dans un même alignement ; ce qui participe aussi à la réduction de la complexité du système en limitant le nombre de pièces et, par conséquent, des moyens d'entraînement (par ex. moteurs) nécessaires pour effectuer les fonctions de chargement et de positionnement du système d'extraction.

Plus particulièrement, la partie complémentaire du système d'extraction est une douche munie de moyen(s) pour l'introduction d'eau dans la capsule. On entend par "douche", la partie du système d'extraction ayant pour fonction de réaliser l'ouverture de la capsule pour l'alimenter en eau. L'invention propose donc que cette partie soit associée au moyen d'obturation mobile de façon à coordonner son déplacement à celui du moyen d'obturation lors du positionnement en fermeture du système d'extraction, de façon à simplifier le dispositif et réduire le temps de chargement par rapport à l'art existant.

Selon un autre aspect de l'invention, la partie de réception du système d'extraction comprend un logement mobile pour loger la capsule et des moyens de déplacement permettant le déplacement en fermeture du logement contre la douche dans la direction d'alignement des deux parties pour permettre l'extraction. Autrement dit la fermeture du système d'extraction est obtenue par un mouvement relatif de translation ; donc moins complexe que les mouvements combinés rotation-translation de l'état de l'art, plus particulièrement de la demande EP 1046366. On obtient donc un assemblage plus rapide, une plus grande précision, moins d'usure dans le temps, et donc une durée de vie allongée du dispositif.

Dans un mode préféré, les moyens de déplacement comprennent un piston et une chambre de pression pressurisable par un fluide pour déplacer le piston et ainsi le logement dans la direction de la douche et un élément de rappel élastique permettant le retour en position d'ouverture du logement par retrait du piston. Un tel système est d'utilisation particulièrement fiable et produit une fermeture sécurisée et résistante à la pression. Toutefois, d'autres systèmes de fermeture peuvent aussi être envisagés comme par action mécanique du type à déplacement de la partie d'extraction mobile le long d'une tige filetée avec entraînement par moteur électrique, par exemple, ou tout autre moyen équivalent.

Selon un autre aspect de l'invention, les moyens de déchargement d'une capsule individuelle dans la partie de réception du système d'extraction comprennent par ailleurs un élément de séparation coordonné au mouvement de l'élément d'obturation de manière à s'introduire entre la première capsule dans la série positionnée en regard du passage et la seconde capsule dans la série au moment où l'élément d'obturation se déplace dans la position d'ouverture pour la descente de ladite première capsule. Une telle configuration participe aussi à la simplification du dispositif en évitant le recours à un élément indépendamment commandé.

Selon une autre caractéristique avantageuse de l'invention, le moyen d'obturation comprend un moyen d'expulsion de la capsule qui expulse la capsule hors de la partie de réception du système d'extraction sous l'effet du déplacement de l'élément d'obturation en position d'ouverture de façon à libérer la partie de réception pour la descente d'une nouvelle capsule au travers du passage. Une telle configuration relève du même souci d'éviter le recours à un élément indépendamment commandé par des moyens de commandes supplémentaires mais tire parti du mouvement du moyen d'obturation lui-même.

Ces caractéristiques et leurs avantages ainsi que d'autres possibles pourront être mieux compris à la lumière de la description qui suit et des dessins qui suivent :
Fig. 1 est une vue en perspective d'un dispositif d'extraction avec système de chargement en capsules selon l'invention ;
Fig. 2 est une vue en perspective similaire du dispositif sans le moyen d'emmagasinage en capsule ;
Fig. 3 est une vue de dessous du dispositif de la Fig. 2 ;
Fig. 4 est une vue similaire à la Fig. 3 mais sans la partie de réception du système d'extraction ;
Fig. 5 est une vue de profil dans la direction indiqué par la flèche A de la Fig. 3 ;
Fig. 6 est une vue en coupe D-D de la Fig. 5 lors de l'étape de chargement/expulsion de la capsule dans le dispositif ;
Fig. 7 est une vue de profil selon la direction indiquée par la flèche B de la Fig. 3 ;
Fig. 8 est une vue en coupe selon A-A de la Fig. 7 avec le système d'extraction contenant une capsule à extraire en position avant le verrouillage du système d'extraction ;

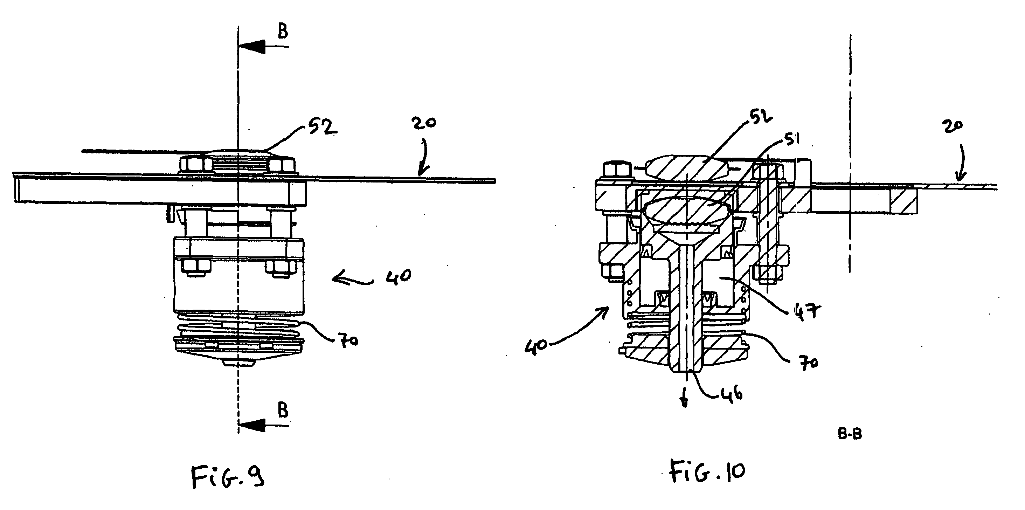

Fig. 9 est une vue de profil selon la direction indiquée par la flèche B de la Fig. 3 mais avec le système en position de verrouillage (Ressort de rappel comprimé) ;
Fig. 10 est une vue en coupe selon B-B de la Fig. 9.

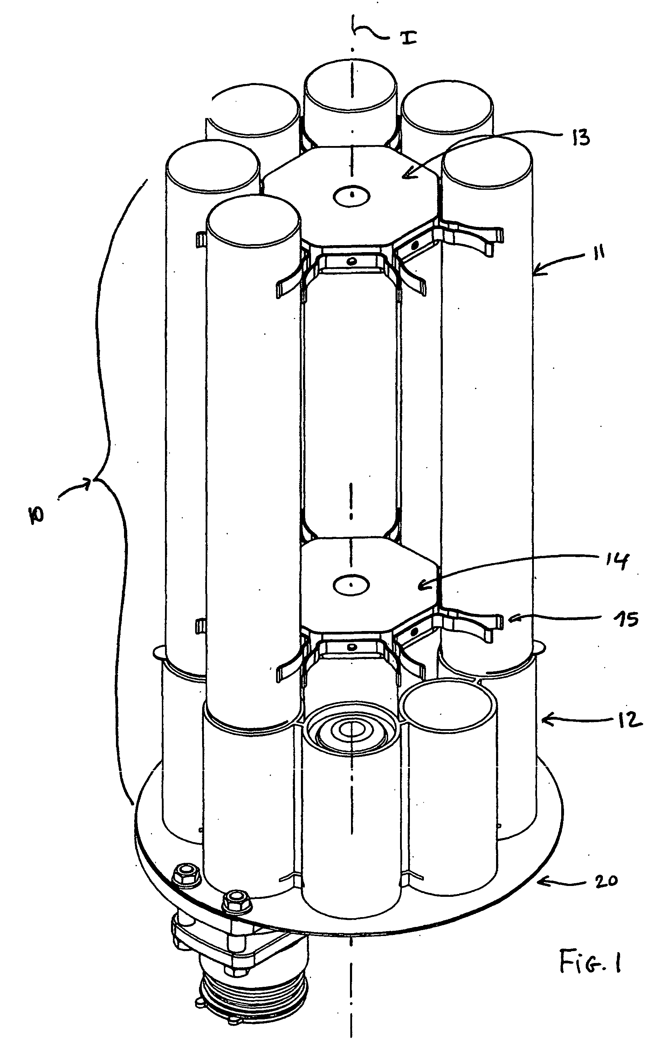

Le dispositif d'extraction 1 selon l'invention est représenté à la Fig. 1 de manière partielle afin de faciliter la compréhension des caractéristiques principales de l'invention. Il comprend un système d'emmagasinage ou carrousel 10 en capsules arrangé de façon à rassembler plusieurs séries de capsules logées dans des éléments de recharge amovibles 11. Les capsules sont ainsi empilées de manière libre dans les éléments de recharge ou cartouches 11. Les éléments de recharge peuvent prendre position dans un ordre choisi, sur des tube-supports 12 formant la base du carrousel. Les tube-supports on la forme de tubes de même configuration que les éléments de recharge de façon à ce que ceux-ci s'adaptent en alignement pour les alimenter en capsules. La longueur des tube-supports 12 est fonction du stock-tampon jugé nécessaire pour assurer un service en cas de retrait des cartouches amovibles 11 lors de leur remplacement. Les tube-supports sont traversants de façon à laisser passer les capsules de haut-en-bas. Les tube-supports sont reliés entre eux pour former un ensemble rigide facilement déplaçable en rotation sans subir de déformation notable. Les cartouches 11 sont montées en orbite sur un ensemble central formé de volants 13, 14 espacés verticalement auxquels sont rattachés des moyens de connexion amovibles 15 destinés à retenir les cartouches. Ces moyens de connexion peuvent être, comme représentés, des pinces ou tout autre moyen équivalent. Les volants 13, 14 sont montés de manière solidaire en rotation sur un arbre central (non représenté) de façon à pouvoir entraîner l'ensemble du carrousel 10 en rotation.

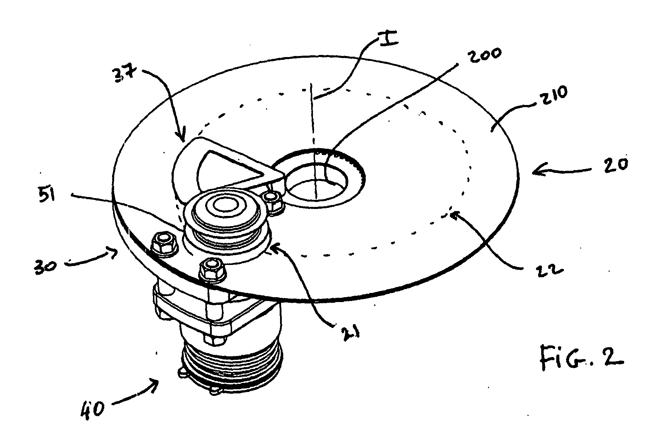

La Fig. 2 montre les moyens de déchargement en capsules et le moyen d'extraction qui y est associé. Ainsi, les moyens de déchargement comprennent une plaque-support 20 fixée au bâti du dispositif. La plaque-support 20 est traversée par un trou central 200 permettant le passage de l'arbre du système d'emmagasinage (non-représenté). Le système d'emmagasinage 10 est donc rendu mobile en rotation par rapport à la plaque-support 20 qui est fixe. La plaque-support 20 présente une surface supérieure 210 formant un moyen de support et de retenue aux capsules disposées dans les tube-supports 12 ; lesquels sont déplaçables au glissement autour de la plaque-support 20.

Selon l'invention, la plaque-support 20 comprend un passage 21 disposé de manière excentrée par rapport à la plaque-support mais situé dans la trajectoire circulaire 22, représentée en ligne pointillée, du déplacement des tube-supports 12. Le passage 21 possède une ouverture de section correspondante à la section d'ouverture des tube-supports. Ainsi, lorsqu'un tube-support est immobilisé dans l'alignement du passage 21 de la plaque-support, la capsule la plus basse dans la pile du tube-support sélectionné est amené en regard du passage 21.

En dessous de la plaque-support se trouve un ensemble d'obturation 30 ayant pour fonction de commander la descente de la capsule se trouvant dans le passage. L'ensemble d'obturation forme une base 31 de forme sensiblement triangulaire contiguë par rapport à la plaque-support 20 et déplaçable par rapport à celle-ci de manière angulaire selon deux positions extrêmes; l'une correspondant à l'obturation du passage, l'autre correspondant à l'ouverture du passage. La base 31 est ainsi dépaçable autour de l'axe central I et commandé par des moyens du type à engrenage 33 (moyens d'entraînement non-représentés). La base est guidée par des moyens de guidage 34 du type fentes tels que représentés afin de régler de manière précise le déplacement de la base 31 entre ses deux positions.

La base 31 comprend une ouverture 32 de section sensiblement équivalente à celle du passage. L'ouverture 32 est localisée de manière à se déplacer dans la trajectoire 22 de déplacement des tube-supports situés sur le côté opposé de la plaque-support. De la même manière, la base comprend une douche d'extraction 35 de forme circulaire et disposée dans la trajectoire 22 également à distance de l'ouverture 32. La douche d'extraction 35 comprend sur sa surface des moyens de perçage 36 et des moyens d'alimentation en eau chaude (non représentés). Les moyens de perçage 36 peuvent être des pointes, lames ou tout autre moyen équivalent.

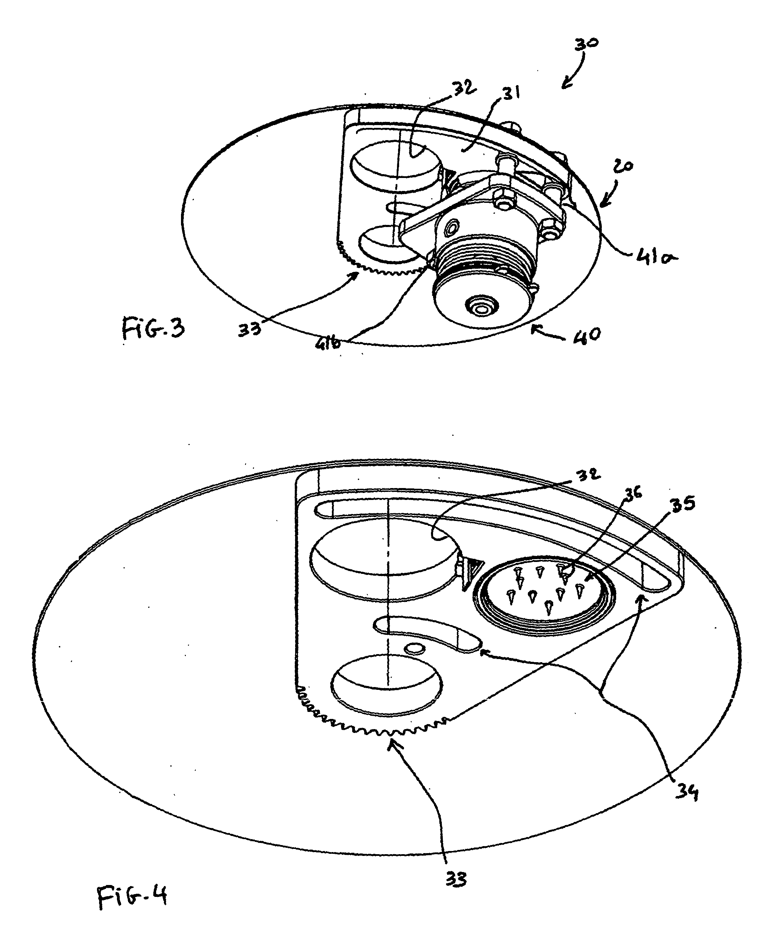

Comme le montre la Fig. 3, un sous-ensemble inférieur d'extraction 40 est monté de manière solidaire sur la plaque-support 20. Le sous-ensemble 40 forme la partie de réception de la capsule lors du chargement. Ainsi, la base 31 du système d'obturation est déplaçable par rapport à ce sous-ensemble 40 le long des moyens de guidage 34 grâce à des tiges de fixation 41a, 41b rendant le sous-ensemble 40 solidaire de la plaque-support.

De retour sur la Fig. 2, un élément de séparation 37 est prévu du côté du carrousel sur la plaque-support dont la fonction est de séparer la capsule située en regard du passage 21 au moment où le passage 21 est rendu coïncidant avec l'ouverture 32 du moyen d'obturation. Pour cela, l'élément de séparation est couplé en mouvement avec la base 31 de façon à se déplacer de concert du côté opposé à l'ouverture 32 de la base. L'élément d'obturation est, par exemple, une pièce en forme de L renversé présentant une paroi de séparation sensiblement parallèle à la plaque support de hauteur par rapport à la plaque-support telle que la paroi est apte à s'insérer entre la première capsule de la série sélectionnée et la seconde capsule dans la série au moment où l'élément d'obturation se déplace dans la position d'ouverture pour la descente de la première capsule.

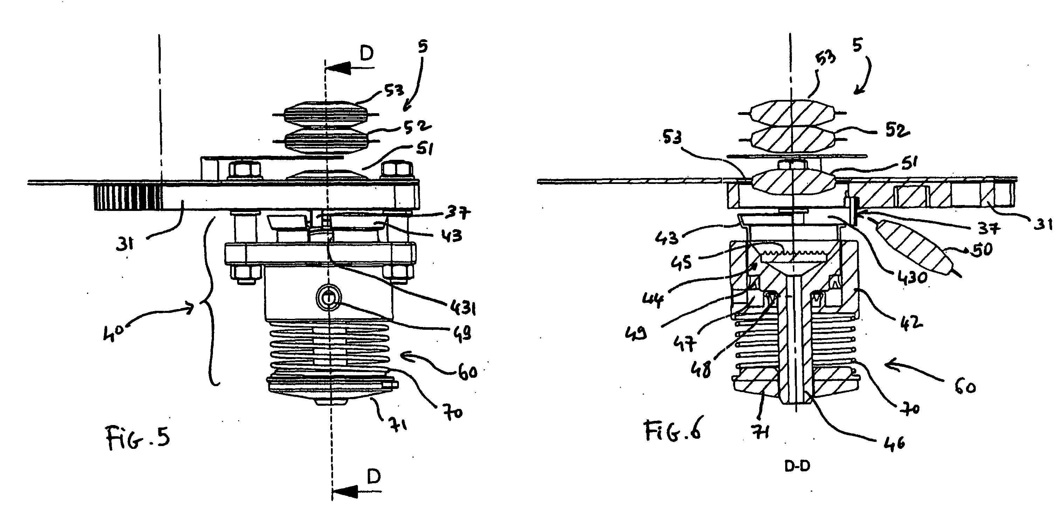

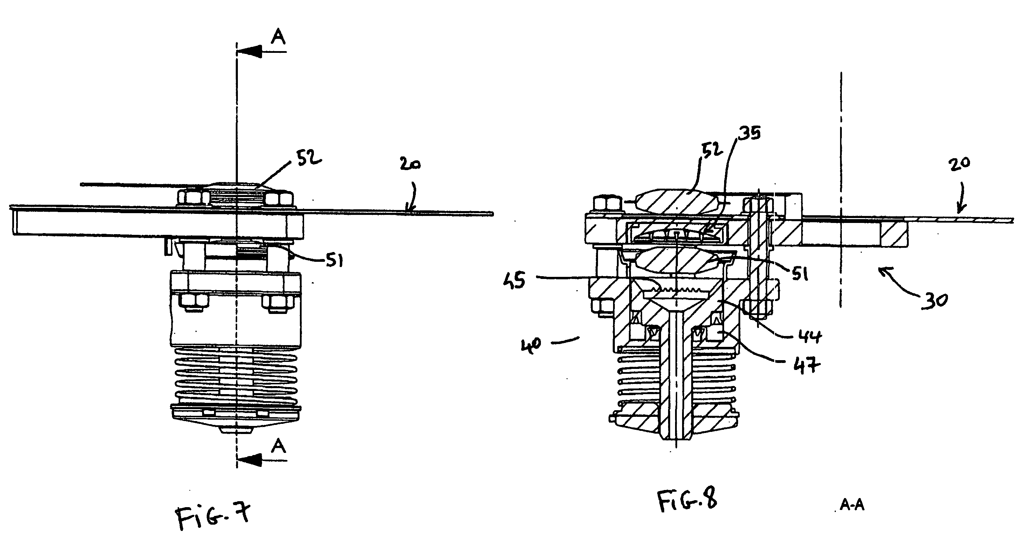

Le sous-ensemble de réception 40 du système d'extraction va maintenant être décrit en référence aux Fig. 5 et 6. Les capsules sont identifiées sous la référence commune 5 et individuellement par les références 50, 51, 52, 53. Le sous-ensemble de réception comprend une embase externe 42 fixe par rapport aux moyens de fixation 41a,41b, un siège 43 fixe prolongeant l'embase ayant pour fonction de recevoir la capsule en position adéquate. Le siège possède ainsi des bords servant d'appui aux bords 53 de la capsule. Du côté correspondant au sens de déplacement de la base du système d'obturation 31 pour amener le passage en ouverture, le siège présente un dégagement 430. Ce dégagement est prévu pour l'expulsion de la capsule après usage hors du siège. L'expulsion est effectuée par un moyen d'expulsion 37 localisé sous la base 31. Du côté opposé au dégagement se trouve une fente 431 permettant le passage du moyen d'expulsion 37 lors du retour en position du système d'extraction.

En dessous du siège 43 se trouve une chambre mobile 44 possédant une plaque de répartition 45 ayant pour but de réaliser l'ouverture de la capsule pour libérer l'extrait liquide. La plaque de répartition possède pour cela des reliefs aiguisés aptes à perforer la capsule sous l'effet d'une pression d'eau suffisante dans la capsule. La chambre 44 est déplaçable en translation dans l'alésage de l'embase 42.

La chambre se prolonge vers le bas par un canal d'écoulement 46 permettant la sortie par gravité du liquide d'extraction directement dans le récipient (non représenté). Des moyens de déplacement 60 sont prévus pour commander le déplacement de la chambre dans l'embase. Ces moyens comprennent un ensemble piston formé par la chambre 44 elle-même, l'embase 42, le canal d'écoulement 46, une chambre de pressurisation interne 47, des joints 48, 49 pour étanchéifier la chambre 47, et une entrée de fluide de pression 49. Ces. moyens sont associés à des moyens de rappel élastique comprenant un ressort de rappel 70 localisés entre l'embase 42 et un appui 71 permettant le retour de la chambre 44 en position d'ouverture.

Le principe de fonctionnement du dispositif selon l'invention va maintenant être décrit plus en détail en rapport avec les figures.

Dans un premier temps, après le choix par l'utilisateur de la capsule dans la série ou cartouche désirée, le carrousel 10 est entraîner en rotation soit manuellement soit par un moteur électrique situé sous le dispositif. Le carrousel est immobilisé lorsque le porte-tube contenant la capsule désirée se trouve en coïncidence dans le passage 21 de la plaque-support 20. La sélection de la capsule peut se faire selon différents modes automatiques. Par exemple, les cartouches 11 peuvent porter un moyen d'identification tel qu'un code-barre lisible par un lecteur situé dans le dispositif. Le code-barre donne des indications sur le type de capsule contenu dans la cartouche. Ces indications sont lues par le lecteur et traitées par un système de contrôle qui commande le moteur du carrousel. Ainsi, la position relative de la cartouche est sans influence sur le choix et la sélection de la capsule.

Après sélection de la cartouche désirée, le dispositif se trouve dans la position illustrée à la Fig. 2, avec une capsule 51 en position dans le passage 21. Le passage est obturé par le moyen d'obturation 30 dont la base 31 en position de fermeture ; c'est à dire avec la douche 35 au-dessus de la partie de réception 40 du système d'extraction. La descente de la capsule 51 est alors commandée par déplacement en rotation du moyen d'obturation 30 de façon à rendre coïncidant le passage 21 de la plaque-support avec l'ouverture 32 de la base d'obturation 31 comme le montre la Fig. 6. Au même moment, la capsule 50 extraite lors du cycle précédant d'extraction est expulsée par le moyen d'expulsion 37 au travers du dégagement 430. Le moyen d'expulsion peut être une lame ou poussoir apte à pousser la capsule 50 hors du siège et, au contraire, flexible dans le sens opposé afin de pouvoir se replier au contact de la capsule nouvellement engagée dans le siège. La lame est positionnée par rapport à l'ouverture 32 de telle sorte à expulser la capsule usagée 50 avant la descente de la nouvelle 51. Au moment de la descente de la nouvelle capsule 51 dans le siège 43, le moyen de séparation 37 se déplace de concert avec la base 31 du moyen d'obturation pour s'insérer entre la capsule descendante 51 et la second capsule 52 dans la série. Celle-ci peut ainsi être retenue en place dans le porte-tube.

Après descente de la nouvelle capsule et expulsion de la capsule usagée, le moyen d'obturation 30 est commandé pour un retour en position telle que représenté aux la Fig. 7 et 8. Le cycle de descente-expulsion puis retour en position peut être très rapide ; de l'ordre d'1/2 seconde à 1 seconde et 1/2 environ. Dans la position de chargement représentée, la douche 35 prévue dans la base est positionnée en alignement de la partie de réception 40 du système d'extraction. Le retour en position a aussi pour effet de faire descendre la capsule 52 au contact de la plaque-support 20 en raison du retrait du moyen de séparation.

L'étape suivant consiste à refermer le système d'extraction sur la capsule à extraire 51. Pour cela, la chambre de pression 47 est pressurisée par injection de fluide au travers de l'ouverture 49; ce qui déplace la chambre mobile 44 vers le haut jusqu'à établir une étanchéité suffisante de la cavité formée avec l'ensemble inférieur et la douche 35. La capsule peut présenter des bords qui sont pincés lors de la fermeture de façon à maintenir en bonne place la capsule lors de la fermeture. Une fois fermé le système d'extraction, la capsule est percée par les pointes de la douche sous l'effet de la compression lors de la fermeture. De l'eau à température suffisante pour réaliser l'extraction peut alors être introduite dans la capsule au travers de la douche 35. La pression à l'intérieur de la capsule augmente au fur et à mesure que le volume d'eau introduit augmente jusqu'à obtenir la rupture de la face inférieure de la capsule au contact des éléments en relief de la plaque de répartition 45. Comme le montre la Fig. 10, le liquide extrait peut alors quitter la capsule et s'écouler par gravité au travers du canal d'écoulement 46. Un récipient tel qu'une tasse est disposé sous le canal 46 de façon à recevoir le liquide.

Un nouveau cycle de chargement-expulsion peut alors commencer.

L'invention a été décrite à titre d'exemple préférentiel en rapport avec un mode préférentiel. Cependant, il est entendu que l'invention peut comprendre de nombreuses variantes ou équivalents à la portée de l'homme de l'art.

## Revendications

1. Dispositif d'alimentation en capsules contenant une substance à extraire comprenant un système d'extraction (1) sous pression pour la préparation d'une boisson et comprenant un moyen d'emmagasinage (10) comprenant des capsules (5) ordonnées selon plusieurs séries, des moyens (20, 21, 200, 210, 30) pour décharger individuellement une capsule au travers d'un passage (21) dans une partie de réception (40) du système d'extraction arrangée en dessous des moyens de déchargement de façon à permettre la descente directe de la capsule libérée dans la partie de réception (40) **caractérisé en ce que** la partie de réception (40) est fixée dans l'alignement dudit passage (21) et comprend des moyens d'ouverture (44, 45) de la capsule aptes à libérer l'extrait liquide et des moyens de conduite (46) de cet extrait.

2. Dispositif d'alimentation selon la revendication 1, **caractérisé en ce que** les moyens de déchargement comprennent :
un moyen de support (20) sur lequel le moyen d'emmagasinage (10) est déplaçable en rotation comprenant ledit passage (21) arrangé pour permettre la descente d'une capsule dans la partie de réception du système d'extraction selon une configuration d'alignement d'une série par rapport au passage (21) et,
Un moyen d'obturation (30) mobile par rapport audit passage (21) entre une position dans laquelle le passage est obturé par le moyen d'obturation (30) de façon à retenir la capsule en regard du passage dans le moyen d'emmagasinage (10) et une position dans laquelle le passage est ouvert pour autoriser la descente de la capsule dans la partie de réception (40) du système d'extraction.

3. Dispositif selon la revendication 2, **caractérisé en ce que** le moyen d'obturation (30) comprend une partie complémentaire du système d'extraction qui lorsque le moyen se trouve dans la position d'obturation du passage (21) se trouve dans l'alignement de la partie de réception du système d'extraction.

4. Dispositif selon la revendication 3, **caractérisé en ce que** la partie complémentaire du système d'extraction est une douche (35) munie de moyens (36) pour l'introduction d'eau dans la capsule.

5. Dispositif selon la revendication 3 ou 4, **caractérisé en ce que** la partie de réception (40) du système d'extraction comprend un logement mobile (44) pour loger la capsule et des moyens de déplacement (60) permettant le déplacement en fermeture du logement contre la douche (35) dans la direction d'alignement des deux parties (40, 30) pour permettre l'extraction.

6. Dispositif selon la revendication 5 **caractérisé en ce que** les moyens de déplacement (60) comprennent un piston (44), une chambre de pression pressurisable (47) pour déplacer le piston et ainsi le logement dans la direction de la douche (31) et un élément de rappel élastique (70) permettant le retour en position d'ouverture du logement par retrait du piston.

7. Dispositif selon l'une quelconque des revendications 2 à 6, **caractérisé en ce que** le moyen d'obturation mobile (30) est monté de manière coaxiale par rapport au moyen de support (20) de façon à être déplaçable selon une portion d'arc entre les deux positions.

8. Dispositif selon l'une quelconque des revendications 2 à 7, **caractérisé en ce que** les moyens de déchargement d'une capsule individuelle dans la partie de réception du système d'extraction comprennent par ailleurs un élément de séparation coordonné au mouvement à l'élément d'obturation de manière à s'introduire entre la première capsule dans la série positionnée en regard du passage et la seconde capsule dans la série au moment où l'élément d'obturation (30) se déplace dans la position d'ouverture pour la descente de ladite première capsule.

9. Dispositif selon l'une quelconque des revendications 2 à 8, **caractérisé en ce que** le moyen d'obturation (30) comprend un moyen d'expulsion (37) de la capsule qui expulse la capsule hors de la partie de réception du système d'extraction sous l'effet du déplacement de l'élément d'obturation en position ouverture de façon à libérer la partie de réception pour la descente d'une nouvelle capsule au travers du passage.

10. Dispositif selon l'une quelconque des revendications précédentes **caractérisé en ce que** le moyen d'ouverture de la partie de réception du système d'extraction est une plaque de répartition de pression (45) munie de reliefs pour l'ouverture de la capsule et d'ouvertures pour le passage de l'extrait liquide.

11. Dispositif selon la revendication 10, **caractérisé en ce que** le moyen de conduite de la partie de réception du système comprend un canal d'écoulement (46) situé en dessous de la plaque de répartition de pression.

## Patentansprüche

1. Vorrichtung zur Zufuhr von Kapseln, die eine zu extrahierende Substanz enthalten, mit einem System (1) zum Extrahieren unter Druck für die Herstellung von Getränken, das ein Speichermittel (10), das in mehreren Reihen angeordnete Kapseln (5) enthält, und Mittel (20, 21, 200, 210, 30) zum Entladen einer einzelnen Kapsel durch einen Durchgang (21) in einen Aufnahmeteil (40) des Extraktionssystems aufweist, der unter den Entlademitteln so angeordnet ist, daß die direkte Abwärtsbewegung der freigegebenen Kapsel in den Aufnahmeteil (40) gestattet wird, **dadurch gekennzeichnet, daß** der Aufnahmeteil (40) in einer Linie mit dem Durchgang (21) befestigt ist und Mittel (44, 45) zum Öffnen der Kapsel, die den flüssigen Extrakt freisetzen können, und Leitungsmittel (46) für den Extrakt aufweist.

2. Zufuhrvorrichtung nach Anspruch 1, **dadurch gekennzeichnet, daß** die Entlademittel folgendes umfassen:
- ein Tragmittel (20), auf dem das Speichermittel (10) drehbar ist und das den Durchgang (21) aufweist, der so angeordnet ist, daß er die Abwärtsbewegung einer Kapsel in den Aufnahmeteil des Extraktionssystems in einer Konfiguration gestattet, gemäß der eine Reihe mit dem Durchgang (21) in einer Linie liegt, und
- ein Verschlußmittel (30), das bezüglich des Durchgangs (21) zwischen einer Stellung, in der der Durchgang durch das Verschlußmittel (30) so verschlossen wird, daß die Kapsel vor dem Durchgang in dem Speichermittel (10) zurückgehalten wird, und einer Stellung beweglich ist, in der der Durchgang offen ist, um die Abwärtsbewegung der Kapsel in den Aufnahmeteil (40) des Extraktionssystems zuzulassen.

3. Vorrichtung nach Anspruch 2, **dadurch gekennzeichnet, daß** das Verschlußmittel (30) ein ergänzendes Teil des Extraktionssystems aufweist, das, wenn das Mittel in der Stellung der Verschließung des Durchgangs (21) ist, mit dem Aufnahmeteil des Extraktionssystems in einer Linie liegt.

4. Vorrichtung nach Anspruch 3, **dadurch gekennzeichnet, daß** das ergänzende Teil des Extraktionssystems eine Dusche (35) ist, die mit Mitteln (36) zur Einführung von Wasser in die Kapsel versehen ist.

5. Vorrichtung nach Anspruch 3 oder 4, **dadurch gekennzeichnet, daß** der Aufnahmeteil (40) des Extraktionssystems eine bewegliche Aufnahme (44) für die Kapsel und Bewegungsmittel (60) aufweist, die die Schließbewegung der Aufnahme auf die Dusche (35) zu in der Fluchtrichtung der beiden Teile (40, 30) gestatten, um die Extraktion zu erlauben.

6. Vorrichtung nach Anspruch 5, **dadurch gekennzeichnet, daß** die Bewegungsmittel (60) einen Kolben (44), eine unter Druck setzbare Druckkammer (47) zur Bewegung des Kolbens und damit der Aufnahme in Richtung der Dusche (31) und ein elastisches Rückholmittel (70) umfassen, das die Rückkehr der Aufnahme in die offene Stellung durch Rückbewegung des Kolbens gestattet.

7. Vorrichtung nach einem der Ansprüche 2 bis 6, **dadurch gekennzeichnet, daß** das bewegliche Verschlußmittel (30) koaxial zu dem Tragmittel (20) angeordnet ist, so daß es gemäß einem Bogenstück zwischen den beiden Stellungen beweglich ist.

8. Vorrichtung nach einem der Ansprüche 2 bis 7, **dadurch gekennzeichnet, daß** die Mittel zum Entladen einer einzelnen Kapsel in den Aufnahmeteil des Extraktionssystems ferner ein Trennelement aufweisen, das bezüglich Bewegung mit dem Verschlußelement so koordiniert ist, daß es zwischen die erste Kapsel in der vor dem Durchgang positionierten Reihe und der zweiten Kapsel in der Reihe zu dem Zeitpunkt eintritt, zu dem das Verschlußelement (30) sich in die Öffnungsstellung für die Abwärtsbewegung dieser ersten Kapsel bewegt.

9. Vorrichtung nach einem der Ansprüche 2 bis 8, **dadurch gekennzeichnet, daß** das Verschlußmittel (30) ein Mittel (37) zum Ausstoßen der Kapsel aufweist, das die Kapsel aus dem Aufnahmeteil des Extraktionssystems unter der Wirkung der Bewegung des Verschlußelements in die Öffnungsstellung ausstößt, so daß der Aufnahmeteil für die Abwärtsbewegung einer neuen Kapsel durch den Durchgang freigegeben wird.

10. Vorrichtung nach einem der vorhergehenden Ansprüche, **dadurch gekennzeichnet, daß** das Öffnungsmittel des Aufnahmeteils des Extraktionssystems eine Druckverteilungsplatte (45) ist, die mit Erhebungen zum Öffnen der Kapsel und mit Öffnungen für den Durchgang des flüssigen Extrakts versehen ist.

11. Vorrichtung nach Anspruch 10, **dadurch gekennzeichnet, daß** das Leitungsmittel des Aufnahmeteils des Systems einen Ablaufkanal (46) umfaßt, der sich unter der Druckverteilungsplatte befindet.

## Claims

1. Device for supplying cartridges containing a substance to be extracted comprising a pressurized extraction system (1) for the preparation of a beverage and comprising a means of storage (10) comprising cartridges (5) arranged in several series, means (20,21,200,210,30) for individually discharging a cartridge through a passage (21) in a receiving part (40) of the extraction system arranged below the discharge means so as to enable the freed cartridge to descend directly into the receiving part (40), **characterized in that** the receiving part (40) is fixed in the alignment of the said passage (21) and includes means (44,45) for opening the cartridge capable of liberating the liquid extract and means for conducting (46) this extract.

2. Supply device according to claim 1, **characterized in that** the discharge means comprise :
a supporting means (20) on which the storage means (10) can be moved in rotation including the said passage (21) arranged so to enable a cartridge to descend into the receiving part of the extraction system according to a configuration where a series is aligned with respect to the passage (21) and,
a sealing means (30) that is movable with respect to the said passage (21) between the position in which the passage is sealed by the sealing means (30) so as to hold the cartridge opposite the passage in the storage means (10) and a position in which the passage is open so as to permit the descent of the cartridge into the receiving part (40) of the extraction system.

3. Device according to claim 2, **characterized in that** the sealing means (30) includes a complementary part of the extraction system which, when the means is situated in the position where the passage is sealed (21), is situated aligned with the receiving part of the extraction system.

4. Device according to claim 3, **characterized in that** the complementary part of the extraction system is a shower (35) provided with means (36) for introducing water into the cartridge.

5. Device according to claim 3 or 4, **characterized in that** the receiving part (40) of the extraction system includes a movable housing (44) for housing the cartridge and means of movement (60) permitting movement while closed of the housing against the shower (35) in the direction of alignment of the two parts (40, 30) in order to permit extraction.

6. Device according to claim 5 **characterized in that** the means of movement (60) comprise a piston (44), a pressurizable pressure chamber (47) for moving the piston and therefore the housing in the direction of the shower (31) and an elastic return element (70) enabling the housing to return to the open position by retraction of the piston.

7. Device according to any one of claims 2 to 6, **characterized in that** the movable sealing means (30) is mounted coaxially with respect to the supporting means (20) so that it can be moved along a portion of arc between two positions.

8. Device according to any one of claims 2 to 7, **characterized in that** the means for discharging an individual cartridge into the receiving part of the extraction system additionally include a separating element coordinated to the movement of the sealing element so as to be introduced between the first cartridge in the series positioned opposite the passage and the second cartridge in the series at the moment when the sealing element (30) moves into the open position for the descent of the said first cartridge.

9. Device according to any one of claims 2 to 8, **characterized in that** the sealing means (30) includes a means (37) for expelling the cartridge which expels the cartridge outside the receiving part of the extraction system under the effect of the movement of the sealing element into the open position so as to free the receiving part for the descent of a new cartridge through the passage.

10. Device according to any one of the preceding claims **characterized in that** the means for opening the receiving part of the extraction system is a pressurised distribution plate (45) provided with raised portions for opening the cartridge and openings for the passage of the liquid extract.

11. Device according to claim 10, **characterized in that** the conducting means of the receiving part of the system includes an outflow channel (46) situated below the pressurized distribution plate.
